# EUROPÄISCHE PATENTSCHRIFT

(11) **EP 2 108 441 B1**
(45) Veröffentlichungstag und Bekanntmachung des Hinweises auf die Patenterteilung: **05.06.2019**
(21) Anmeldenummer: 08020684.0
(22) Anmeldetag: 28.11.2008
(51) Int. Cl.: B01D 53/94, B01J 23/42, B01J 23/44, B01J 29/00, B01J 29/068, B01J 29/83, B01J 29/85, B01J 35/00, B01J 37/02, F01N 3/20

(54) **SCHWEFELRESISTENTES ABGASNACHBEHANDLUNGSSYSTEM ZUR OXIDATION VON NO**
SULPHUR RESISTANT EXHAUST GAS TREATMENT SYSTEM FOR OXIDISING NO
SYSTÈME DE TRAITEMENT DES GAZ D'ÉCHAPPEMENT RÉSISTANT AU SOUFRE DESTINÉ À L'OXYDATION DE NO

(30) Priorität: 12.04.2008 DE 102008018519
(43) Veröffentlichungstag der Anmeldung: 14.10.2009
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A- 1 992 409
- WO-A-2005/077498
- WO-A-2006/044974
- DE-A1- 10 049 119
- DE-A1- 19 921 974
- US-A- 5 677 258

## Beschreibung

Gegenstand der Erfindung ist ein Abgasnachbehandlungssystem bei mit Luftüberschuss betriebenen Brennkraftmaschinen, wie Dieselmotoren und Ottomotoren mit Direkteinspritzung, gemäß dem Oberbegriff des Anspruches 1.

Um die gesetzlich vorgeschriebenen Abgasgrenzwerte einzuhalten, sind inzwischen nahezu alle mit Luftüberschuss betriebenen Brennkraftmaschinen mit katalytisch arbeitenden Nachbehandlungssystemen wie
- NOₓ-Speicherkatalystoren,
- SCR-Katalysatoren oder
- Partikelfiltern
ausgestattet. All diesen Systemen ist gemein, dass Stickstoffdioxid (NO₂) ein wichtiger Bestandteil der an den Nachbehandlungssystemen ablaufenden Reaktionen ist.

Das starke Oxidationsmittel NO₂ wird an, meist platinhaltigen, Katalysator zur Oxidation von Stickstoffmonoxid (nachfolgend NO-Oxidationskatalysatoren) mit Hilfe von im Abgas enthaltenen Sauerstoff aus dem vom Motor emittierten Stickstoffmonoxid gebildet.

2NO+O₂ ⇔ 2NO₂ (1)

Das Problem dieser NO-Oxidationskatalysatoren besteht darin, dass die maximal erzielbaren NO₂-Anteile bei hohen Temperaturen thermodynamisch begrenzt werden. Dies führt dazu, dass, im Gegensatz zu anderen Abgaskatalysatoren, die gewünschten Umsätze, nach einem Anstieg bei niedrigen Temperaturen, bei hohen Temperaturen wieder absinken und sich kein ausgeprägtes, plateauartiges Umsatzmaximum ausbildet.

Als Maßnahme zur Reduktion der Stickoxide hat sich das SCR-Verfahren etabliert, wobei "SCR" für "selektive katalytische Reduktion" steht. Der Einsatz von SCR-Katalysatoren erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%.

Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂+6H₂O (2)

Für die Zersetzung des Reduktionsmittels ist, insbesondere nach dem Start der Brennkraftmaschine, bzw. beim Betreiben der Brennkraftmaschine im unteren Leistungsbereich, die Abgastemperatur zu niedrig, um, ohne den Anfall problematischer Nebenprodukte Ammoniak zu erzeugen.

Im Zusammenhang mit der Zersetzung von Harnstoff ((NH₂)₂CO) in Ammoniak (NH3) ist bekannt, dass dies unter optimalen Bedingungen (Temperaturen über 350° C) in zwei Stufen geschieht, nach

(NH₂)₂CO ⇒ NH₃+HNCO (3)

erfolgt zunächst die Thermolyse, d. h. die thermische Zersetzung von Harnstoff. Anschließend erfolgt nach

HNCO + H₂O ⇒ NH₃ + CO₂ (4)

die Hydrolyse, also die katalytische Zersetzung von Isocyansäure (HNCO) in Ammoniak (NH₃) und Kohlendioxid (CO₂).

Liegt das Reduktionsmittel in wässriger Form vor, wie z. B. als eutektische Harnstofflösung (Markenname AdBlue), muss dieses Wasser zusätzlich vor und während der eigentlichen Thermo- und Hydrolyse verdampfen.

Sind die bei der vorstehenden Reaktion nach (3) und (4) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (5) gebildeten Isocyansäure gemäß

3HNCO ^{<350°C →}_{← >350°C} (HNCO)₃ (5)

entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Wird den SCR-Katalysatoren ein platinhaltiger NO-Oxidationskatalysator zur Bildung von NO₂ vorgeschaltet

2NO+O₂ ⇔ 2NO₂ (1)

so kann die SCR-Reaktion erheblich beschleunigt und die Tieftemperaturaktivität merklich angehoben werden.

NO+2NH₃+NO₂ ⇒ 2N₂+3H₂O (6)

Dabei ist darauf zu achten, dass der NO₂-Anteil an den Gesamtstickoxiden nicht über 50% liegt, da es ansonsten zu einem Rückgang des NOₓ-Umsatzes kommt.

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert.

Zur Minimierung der Feinstoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch.

2 NO₂ + C ⇒ 2 NO + CO₂ (7)

NO₂ + C ⇒ NO + CO (8)

2C + 2NO₂ ⇒ N₂ + 2CO₂ (9)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator.

Bei Einsatz eines NOₓ-Speicherkatalysators wird ständig zwischen über- und unterstöchiometrischer Verbrennung gewechselt. In den mageren Betriebsphasen werden dabei die Stickoxide in Form von Nitraten eingespeichert, die in den fetten Betriebsphasen mit Hilfe von Kohlenmonoxid und Kohlenwasserstoffen zu Stickstoff reduziert werden. Die Einspeicherung als Nitrat läuft über NO₂ ab, das sich an Speicherkomponenten, die Barium oder Kalzium, in Form von Nitrat anlagert.

Wie bereits beschrieben, wird das für die oben beschriebenen Reaktionen notwendige NO₂ an, meist platinhaltigen, NO-Oxidationskatalysatoren gebildet. Im realen Motorbetrieb stellt allerdings die Verschwefelung der NO-Oxidationskatalysatoren durch im Kraftstoff und/oder im Motorenöl enthaltenen Schwefel ein Problem dar. Durch die Verbrennung bildet sich aus diesem Schwefel SO₂, das an den nachgeschalteten NO-Oxidationskatalysatoren zu SO₃ oxidiert wird.

S + O₂ ⇒ SO₂ (10)

2SO₂ + O₂ ⇒ SO₃ (11)

Dabei hat es sich gezeigt, dass die Menge an gebildetem SO₃ und die Menge an gebildetem NO₂ in direktem Zusammenhang zu einander stehen, dass bedeutet, dass ein Katalysator, der große Mengen an NO₂ bildet, zugleich große Mengen an SO₃ generiert.

Dieses SO₃ bildet mit dem metallhaltigen Katalysatorwashcoat Sulfate oder mit Wasser Schwefelsäure, die auf der Oberfläche physisorbiert wird.

H₂O + SO₃ ⇒ H₂SO₄ (12)

Beides führt zu einer Abdeckung der aktiven Zentren des Katalysators und damit zu einem Rückgang der Aktivität. Eine Regeneration der Katalysatoren kann durch Anhebung der Abgastemperaturen auf über 500°C erfolgen, allerdings wird diese Temperatur im normalen Fahrzeugbetrieb, speziell bei Einsatz eines Abgasturboladers, kaum erreicht. Zudem ist die aktive Temperaturanhebung üblicherweise mit einem Anstieg des Kraftstoffverbrauchs verbunden.

In der US 5 677 258 A ist eine Katalysatorkonstruktion zum Reduzieren von Stickoxiden (NOx), Kohlenwasserstoffen (HC) und Kohlenmonoxid (CO) im Abgas eines Fahrzeugmotors zu Stickstoff (N2), Wasser (H2O) und Kohlendioxid (CO2) beschrieben, wobei die Katalysatorkonstruktion einen Katalysatorträger, sowie eine auf dem Katalysatorträger aufgebrachte Katalysatorunterschicht aufweist, die mindestens Barium oder Lanthan enthält. Auf die Katalysatorunterschicht ist eine Katalysatoroberschicht aufgebrachte, die ein Mittel für die Absorption von Wasser in einem Gas enthält. Weiter ist ein katalytisches Metall vorgesehen, das mindestens in der Katalysatorunterschicht oder in der Katalysatoroberschicht enthalten ist. Das Wasserabsorptionsmittel umfasst dabei ein kristallines Metallsilikat, bei dem es sich um ein Zeolith vom Typ MFI z.B. ZSM 5 handeln kann, dieses verhindert auch die Vergiftung des darunter liegenden Katalysatormaterials mit Schwefel.

Aus der nachveröffentlichten EP 1 992 409 A ist ein als separates Bauteil ausgebildeter Oxidationskatalysator bekannt, der stromauf des SCR-Katalysators anzuordnen ist. Eine Oxidationsfunktion in der ersten, obersten Lage ist hier explizit ausgeschlossen, da dies dazu führen würde, dass Ammoniak nicht adsorbiert, sondern oxidiert würde und somit gar nicht die darunter liegende Katalysatorschicht erreichen würde.

Ausgehend vom vorstehend beschriebenen Stand der Technik ist es Aufgabe der Erfindung, unter Vermeidung der Nachteile bekannter Verfahren, die Deaktivierung von Katalysatoren zur Bildung von NO₂ durch Schwefelverbindungen gemäß dem Anspruch 1 zu vermeiden.

Der Grundgedanke besteht darin, SO₂ daran zu hindern, in Kontakt mit den aktiven Zentren des NO-Oxidationskatalysators zu kommen, um so eine Bildung von SO₃ und in dessen Folge eine Bildung von Schwefelsäure und/oder Sulfaten zu vermeiden.

Hierfür wird stromauf des NO-Oxidationskatalysators und/oder auf diesem ein Molekularsieb, z.B. als Schicht, angebracht bzw. aufgebracht. Die Poren des Molekularsiebs, durch die die Reaktanten aus der Gasströmung an die Katalysatoroberfläche diffundieren müssen, sind so ausgelegt, dass sie kleiner als der Moleküldurchmesser von SO₂, aber größer als der Moleküldurchmesser von NO, NO₂ und O₂ sind. Dadurch können die für die Reaktion am Katalysator notwendigen Moleküle den stromab zum Molekularsieb und/oder unter dem Molekurarsieb liegenden Katalysator erreichen, während das für die SO₃-Bildung verantwortliche SO₂ durch das Molekularsieb, auf Grund sterischer Hinderung, von dem NO-Oxidationskatalysator ferngehalten werden. Dies gelingt, dadurch, dass die für die Bildung von NO₂ relevanten Moleküle NO, NO₂ und O₂ Durchmesser von 1,5Å - 3Å aufweisen, während dieser für SO₂ bei 7Å liegt, d.h. die Porendurchmesser des Molekularsiebs sind deshalb erfindungsgemäß zwischen 3Å und 6Å zu wählen.

Als aktivste Komponente zur Oxidation von NO hat sich Platin erwiesen. Zur Erhöhung der thermischen Stabilität kann zusätzlich Palladium zugegeben werden. Da Palladium nur eine geringe NO-Oxidationsaktivität aufweist, sinkt der NO- Umsatz von Pt/Pd-Mischungen im Vergleich zu reinen Pt-NO-Oxidationskatalysatoren mit steigendem Palladiumanteil allerdings ab.

Das Molekularsieb kann als Molekularsieb-Schicht direkt auf dem NO-Oxidationskatalysator oder auf einem stromauf zu diesem angeordneten Träger angeordnet werden, so dass für die gewünschten geringen Schichtdicken in vorteilhafter Weise die notwendige Stabilität erreicht wird.

Die definierten Porendurchmesser des Molekularsiebs lassen sich relativ einfach durch die Verwendung von Zeolithen darstellen. Durch die gezielte Anordnung der AlO₄- und SiO₄-Tetraeder lassen sich unterschiedliche Gitterkonstanten sowie Strukturen und damit Porendurchmesser erzeugen. Außerdem ist der Einsatz von Silikaten, Metallsilikaten, Aluminaten, Metallaluminaten, Silicophosphaten, Metallsilicophosphaten, Silicoaluminophosphaten, Aluminophosphaten, Metallaluminophosphaten und Aluminiumsilikaten als Molekularsieb vorteilhaft.

Bei der Auswahl eines geeigneten Molekularsiebtyps ist darauf zu achten, dass mit sinkendem Porendurchmesser zwar die Trennschärfe zwischen SO₂ und den restlichen Abgaskomponenten zunimmt, gleichzeitig wird allerdings die Diffusion von NO, NO₂ und O₂ an bzw. von den aktiven Zentren erschwert, was den NO-Umsatz verschlechtern kann. Da der Einfluss der Porendiffusion auf die Umsätze mit steigender Temperatur zunimmt, können für unterschiedliche Temperatureinsatzfälle unterschiedliche Porendurchmesser und damit Molekularsiebtypen Verwendung finden. Besonders kleine Porendurchmesser bis zu einschließlich 3Å liegen bei Molekularsieben vom Typ EDI vor, während bei den Typen ABW, AEI, AFR, AWW, BIK, CHA, -CLO, KFI, LTA, NAT, PAU, RHO, -RON, THO der Porendurchmesser bis zu einschließlich 4Å beträgt. Bis einschließlich 5Å werden bei der Verwendung von AFT, ATT, ATV, BRE, CAS, -CHI, DAC, DDR, GIS, GOO, HEU, JBW, LEV, MON, PHI, WEN, YUG erreicht, bis einschließlich 6Å bei APC, EAB, EPI, ERI, EUO, FER, LAU, MEL, MER, MFI, MFS, MTT, MTW, NES, TON.

Die vorstehend genannten Bezeichnungen entsprechen denen der Strukturkommission der IZA. IZA steht dabei für International Zeolite Association.

Für die Ausführung der Molekularsiebe als Zeolith werden besonders kleine Porendurchmesser bis zu einschließlich 3Å bei Zeolithen vom Typ Edingtonit erzielt, während bei den Typen Li-A, Bikitait, Chapazit, Cloverit, ZK-5, Zeolith A, Natrolit, Paulingit, Roggianit, Thomsonit der Porendurchmesser bis zu einschließlich 4Å beträgt. Bis einschließlich 5Å werden bei der Verwendung von Brewsterit, Chiavennit, Dachiardit, Gismondin, Goosecreekit, Heulandit, Na-J, Levyne, Montesommait, Phillipsit, Wenkit, Yugawaralit erreicht, bis einschließlich 6Å bei TMA-E, Epistilbit, Erionit, EU-1, Ferrierit, Laumontit, ZSM-11, Merlionit, ZSM-5, ZSM-57, ZSM-23, ZSM-12, NU-87 und Theta-1.

Bei der Verwendung von Aluminophosphaten bieten sich AlPO-18 (AEI), AlPO-22 (AWW), AlPO-52 (AFT), AlPO-12-TAMU (ATT), AlPO-25 (ATV) und AlPO-C (APC) an, bei Silikoaluminophosphat SAPO-40 (AFR).

Die vorgenannten Molekularsieb-, Zeolith-, Aluminophosphate und Silikoaluminophosphattypen können jeweils einzeln oder in beliebiger Kombination vorteilhaft als Molekularsiebmaterial eingesetzt werden.

Die mittlere Schichtdicke des Molekularsiebs bzw. der Molekularsieb-Schicht sollte dabei mindestens 3Å betragen. Da die für die NO-Oxidation notwendigen Moleküle NO, NO₂ und O₂ nun zuerst durch die Molekularsieb-Schicht diffundieren müssen, kann es, vor allem bei hohen Temperaturen, zu einer Limitierung der NO-Umsätze auf Grund von Porendiffusion kommen. Um den Einfluss der Porendiffusion nicht unnötig zu erhöhen, sollte die mittlere Dicke des Molekularsiebs bzw. der Molekularsieb-Schicht daher 5µm nicht übersteigen. Demgegenüber liegt die Schichtdicke der Katalysatorschicht bei einem, durch Beschichtung oder Extrusion realisierten, Katalysator üblicherweise zwischen 5µm - 500 µm.

Zur Verbesserung der Umsätze am NO-Oxidationskatalysator ist es sinnvoll, die als Aktivkomponenten wirkenden Metalle, wie Platin und gegebenenfalls Palladium, ebenfalls in eine Zeolithmatrix, insbesondere vom Typ MFI und/oder BEA und/oder FAU, zu integrieren. Dabei ist allerdings darauf zu achten, dass das Molekularsieb bzw. die Molekularsieb-Schicht keine oder zumindest eine geringere Menge SO₃ erzeugenden Komponenten, insbesondere Platin aufweist, als der eigentliche NO-Oxidationskatalysator, da üblicherweise die NO-Oxidation und die SO₂-Oxidation parallel ablaufen.

Die Herstellung von zeolithhaltigen Katalysatoren wird in DE 3912596C2, EP 0311066 und EP 003486 beschrieben und ist damit dem Fachmann bekannt.

Der Zeolithtyp des Katalysators und des Molekularsiebs bzw. der Molekularsieb-Schicht können je nach Anwendungsfall gleich oder unterschiedlich sein.

Die Katalysatoren können durch Extrusion oder durch Beschichtung eines keramischen oder metallischen Trägers hergestellt werden. Durch die Extrusion ergeben sich üblicherweise wabenförmige Katalysatoren mit parallelen Strömungskanälen (DE 22 22 468 C2), während sich die Form und die Ausrichtung der Strömungskanäle bei der Verwendung von metallischen Katalysatorträgern weitestgehend frei wählen lässt.

Nach der Trocknung und/oder Kalzinierung der Katalysatoren wird in einem weiteren Arbeitsschritt die Molekularsieb-Schicht ausgebildet. Hierfür stehen zwei unterschiedliche Verfahren zur Auswahl.

Zum einen ist das Aufbringen einer Molekularsieb-Schicht, ähnlich der Beschichtung von Substraten mit Katalysatorwashcoat, möglich. Anschließend muss diese Schicht, analog zu den Katalysatoren, getrocknet und kalziniert werden, um eine stabile und feste Verbindung zwischen der Molekularsieb-Schicht und dem Katalysator sicherstellen zu können. Werden für die Molekularsieb-Schicht Zeolithe eingesetzt, bietet sich die Beschichtung mit Hilfe einer zeolithhaltigen Suspension an. Die mittlere Dicke einer derart aufgebrachten Schicht liegt üblicherweise im Bereich von 0,5µm - 5µm.

Wenn große Mengen von Kohlenwasserstoffen im Abgas enthalten sind, können sich diese auf der Molekularsiebschicht und/oder in deren Poren ablagern, verkoken und dadurch zu einer Verstopfung der Siebschicht führen. Aus diesem Grund ist es sinnvoll, in die Molekularsieb-Schicht zusätzlich Aktivkomponenten, die eine Oxidation von Kohlenwasserstoffen ermöglichen, zu integrieren. Dazu zählen unter anderem Palladium, Ruthenium, Iridium, Rhodium,Wolfram, Titan, Lanthan, Molybdän, Cer und/ oder Mangan. Bei Einbindung der Elemente in eine Zeolithstruktur erhöhen sich auf Grund der hohen Dampfdrücke innerhalb der Porenstruktur die Sublimationstemperaturen erheblich, so dass bis zu 750°C selbst der Einsatz von Vanadium innerhalb der Molekularsieb-Schicht möglich wird.

Um das Verkoken der Molekularsiebporen zu vermeiden, ist erfindungsgemäß auf der, dem kohlenwasserstoffhaltigen Abgas zugewandten Seite des Molekularsiebs, ein Katalysator zur Oxidation von Kohlenwasserstoffen angebracht. Wie schon beim Molekularsieb beschrieben, kann er in einem weiteren Arbeitschritt auf dem Molekularsieb als Katalysatorschicht aufgebracht werden. Als Aktivkomponenten kommen erfindungsgemäß Palladium, Ruthenium, Iridium, Rhodium, Wolfram, Titan, Lanthan, Molybdän, Cer und/ oder Mangan in Frage.

Eine weitere Möglichkeit zur Ausbildung der Molekularsieb-Schicht besteht, vor allem bei der Verwendung von zeolithhaltigen, ausgetauschten Katalysatoren, darin, die Konzentration mindestens eines Metalls an der Katalysatoroberfläche durch Ionenaustausch gegen ein anderes Ion, das keine oder nur eine geringe SO₃-Bildungsaktivität besitzt, zu substituieren. Im einfachsten Fall gelingt dies durch Einbringen eines aciden Fluids. Dadurch werden die Metallionen in der Zeolithstruktur durch Protonen aus dem sauren Fluid ersetzt.

Da wasserstoffhaltige Zeolithe wenig stabil sind, sollten anschließend die Protonen gegen Metallkationen mit geringer SO₃- Bildungsaktivität und/oder hoher Kohlenwasserstoffoxidationsaktiviät ausgetauscht werden. Wie bereits oben beschrieben, bieten sich hierfür die Elemente Palladium, Ruthenium, Iridium, Rhodium, Wolfram, Titan, Lanthan, Molybdän, Cer, Mangan oder Vanadium an. Zudem sind ebenfalls nichtmetallische Kationen einsetzbar. Je nach Affinität dieser Elemente kann auf den Zwischenschritt der Protonierung verzichtet werden und durch Wahl eines geeigneten pH-Werts die Metalle direkt ausgetauscht werden. Durch Ionenaustausch hergestellte Molekularsieb-Schichten können extrem dünn ausgeführt werden, so dass deren mittlere Schichtdicke üblicherweise zwischen 3Ä und 1µm liegt.

Als weitere Möglichkeit zur Reduzierung des Bauraums der Abgasnachbehandlungskomponenten bietet es sich an, Partikelfilter mit Katalysatormaterial zur Oxidation von NO und/ oder Kohlenwasserstoffen zu beschichten sowie mit einer Molekularsieb-Schicht, beispielsweise durch Imprägnieren, Ionnenaustausch oder Beschichten, zu versehen. Dabei ist allerdings zu beachten, dass auch nach der Beschichtung noch freie Strömungskanäle innerhalb des Partikelfilters zur Verfügung sehen müssen, um einen unnötig hohen Abgasgegendruck zu vermeiden. Daher sollte die Abgasströmung innerhalb der Filterstruktur an den Molekularsiebporen vorbei- und nicht durch diese hindurchströmen, so dass die Reaktanden nur, analog zu den oben beschriebenen Vorgängen an Katalysatorsubstraten, über Diffusionsvorgänge in die Molekularsiebporen eindringen und so die darunter liegende Katalysatorschicht erreichen. Dies kann beispielsweise durch eine hohe Porosität der Katalysatorschicht erreicht werden. Erzeugt werden kann eine solche hohe Porosität beispielsweise durch die Beimischung von Füllstoffen zum Washcoat, die sich bei der Kalzinierung verflüchtigen oder durch die Beimischung von zeolithfreien Washcoatzusätzen hoher Porosität oder die Beimischung von Zeolithtypen hoher Porosität und/oder großer Porendurchmesser erzielen. Eine weitere Möglichkeit besteht bei hochporösem Filtersubstrat darin, eine dünne und das Filtersubstrat nicht komplett abdeckende bzw. verschließende Beschichtung des Filtermaterials mit dem Katalysatormaterial vorzunehmen, so dass innerhalb des Filtersubstrats noch genügend freie Strömungskanäle vorhanden bleiben. Bei der anschließenden Ausbildung der Molekularsiebschicht ist darauf zu achten, dass diese nicht die freien Strömungskanäle verschließt, sondern nur als dünne Schicht auf den frei zugänglichen Oberflächen der Katalysatorschicht liegt. In vorteilhafter Weise gelingt dies bei zeolithhaltigen Katalysatoren durch den, bereits oben beschriebenen, Ionenaustausch an der Oberfläche des Katalysators. Wie ebenfalls bereits ausgeführt, ist darauf zu achten, dass der Porendurchmesser des Molekularsiebs so gewählt sind, dass die großen SO₂-Moleküle die Molekularsiebschicht nicht passieren können, während dies für die kleineren und unschädlichen Abgasbestandteile wie Sauerstoff, Stickstoff, Kohlendioxid, Stickoxide, Wasser und Kohlenmonoxid möglich ist. Gelingt die Erzeugung der Molekularsieb-Schicht auf dem Katalysator nicht durch reinen Ionenaustausch, so ist eine separate Beschichtung des Katalysators mit Molekularsiebmaterial vorzunehmen.

Der Partikelfilter, auf dem die Katalysatorschicht mit der auf dieser angeordneten Molekularsieb-Schicht angeordnet ist, kann vorteilhaft aus Sintermetall und/oder Keramik und/oder Filterschaum und/oder Keramikfasern und/oder Quarzfasern und/oder Glasfasern und/oder Siliziumcarbid und/oder Aluminiumtitanat bestehen.

Die vorstehend beschriebene Lösung, stellt eine besonders kostengünstige, bauraumsparende und damit vorteilhafte Möglichkeit dar, die Molekularsiebschicht und die Katalysatorschicht zur Erzeugung von NO₂ und/ oder die Katalysatorschicht zur Oxidation von Kohlenwasserstoffen auf einem Katalysatorsubstrat und/oder auf einem Partikelfilter dauerhaft zu kombinieren, so dass sie nicht zerstörungsfrei voneinander getrennt werden können.

Es besteht natürlich auch die Möglichkeit, das Molekularsieb, NO-Oxidationskatalysator und/ oder den Katalysator zur Oxidation von Kohlenwasserstoffen auf getrennten Bauteilen anzubringen, wobei das komplette Abgas durch die Poren des Molekularsiebs geleitet wird, was allerdings einen deutlich höheren Abgasgegendruck, als dies bei der oben beschriebenen Lösungen der Fall ist, zur Folge hat. Bei der getrennten Anordnung des Molekularsiebs stromauf zum NO-Oxidationskatalysator ist darauf zu achten, dass das Abgas frei von festen Partikeln, wie z. B. Ruß ist, da es ansonsten zum Verstopfen der Molekularsiebporen kommt. Dies wird beispielsweise durch die Anordnung des Molekularsiebs stromab eines Partikelfilters und stromauf zum NO-Oxidationskatalysator erreicht. Bei einer solchen Anordnung lässt sich das Molekularsieb auch in vorteilhafter Weise mit dem Partikelfilter kombinieren, indem das Molekularsieb als Schicht auf der Abströmseite des Partikelfilters aufgebracht wird, so dass das Molekularsieb und der Partikelfilter eine nicht zerstörungsfrei zu trennende Einheit bilden. In diesem Fall ist die Beschichtung so vorzunehmen, dass die Poren des Partikelfilters auf seiner Abströmseite vollständig durch das Molekularsieb verschlossen sind, so dass das Abgas durch die Poren des Molekularsiebs strömen muss. Erfindungsgemäß ist auf der Anströmseite des Molekularsiebs ein Katalysator zur Oxidation von Kohlenwasserstoffen angebracht, da es ansonsten zu einem Verstopfen der Molekularsiebporen durch unverbrannte Kohlenwasserstoffe kommt. Als Aktivkomponenten des Katalysators zur Oxidation von Kohlenwasserstoffen werden erfindungsgemäß Palladium, Ruthenium, Iridium, Rhodium, Wolfram, Titan, Lanthan, Molybdän, Cer oder Mangan verwendet.

## Patentansprüche

1. Anordnung zur Abgasnachbehandlung bei mit Luftüberschuss betriebenen Brennkraftmaschinen, wie Dieselmotoren und Ottomotoren mit Direkteinspritzung, wobei die Anordnung einen in der Abgasableitung einer Brennkraftmaschine verbauten Katalysator zur Oxidation von Stickstoffmonoxid aufweist, **dadurch gekennzeichnet, dass** zwischen dem Abgas und dem wenigstens einen Katalysator zur Oxidation von Stickstoffmonoxid und/oder stromauf des wenigstens einen Katalysators zur Oxidation von Stickstoffmonoxid wenigstens ein Molekularsieb, das Schwefeldioxid von dem wenigstens einen Katalysator zurückhält, angeordnet ist, der Durchmesser der freien Durchgänge durch das Molekularsieb zwischen 3Å und 6Å liegt und auf der, dem kohlenwasserstoffhaltigen Abgas zugewandten Seite des Molekularsiebs, ein Katalysator zur Oxidation von Kohlenwasserstoffen angebracht ist, wobei die Aktivkomponente des Katalysators zur Oxidation von Kohlenwasserstoffen ausgewählt ist aus der Gruppe bestehend aus Palladium, Ruthenium, Iridium, Rhodium, Wolfram, Titan, Lanthan, Molybdän, Cer und/oder Mangan.

2. Anordnung nach dem Anspruch 1, **dadurch gekennzeichnet, dass** das Molekularsieb als Molekularsieb-Schicht auf dem Katalysator zur NO-Oxidation ausgebildet ist.

3. Anordnung nach dem Anspruch 1, **dadurch gekennzeichnet, dass** das Molekularsieb als Molekularsieb-Schicht auf einem Träger stromauf zum Katalysator mit NO-Oxidationsaktivität angeordnet ist.

4. Anordnung nach dem Anspruch 1, **dadurch gekennzeichnet, dass** die Aktivkomponente für den Katalysator zur Oxidation von Stickstoffmonoxid Platin und/ oder Palladium enthält.

5. Anordnung nach einem der vorangegangenen Ansprüche, **dadurch gekennzeichnet, dass** die Aktivkomponenten des Katalysators zur Oxidation von Stickstoffmonoxid in eine Zeolithstruktur eingebettet sind.

6. Anordnung nach Anspruch 5, **dadurch gekennzeichnet, dass** der Zeolith vom Typ MFI und/oder BEA und/oder FAU ist.

7. Anordnung nach einem der vorangegangenen Ansprüche, **dadurch gekennzeichnet, dass** das Molekularsieb mit Hilfe von Zeolithen und/oder Silikaten und/oder Metallsilikaten und/oder Aluminaten und/oder Metallaluminaten und/oder Silicophosphaten und/oder Metallsilicophosphaten und/oder Silicoaluminophosphaten und/oder Aluminophosphaten und/oder Metallaluminophosphaten und/oder Aluminiumsilikaten hergestellt ist.

8. Anordnung nach einem der vorangegangenen Ansprüche, **dadurch gekennzeichnet, dass** das Molekularsieb Gitterstrukturen vom Typ EDI und/ oder ABW und/oder AEI und/oder AFR und/oder AWW und/oder BIK und/oder CHA und/oder -CLO und/oder KFI und/oder LTA und/oder NAT und/oder PAU und/oder RHO und/oder -RON und/oder THO und/oder AFT und/oder ATT und/oder ATV und/oder BRE und/oder CAS und/oder -CHI und/oder DAC und/oder DDR und/oder GIS und/oder GOO und/oder HEU und/oder JBW und/oder LEV und/oder MON und/oder PHI und/oder WEN und/oder YUG und/oder APC und/oder EAB und/oder EPI und/oder ERI und/oder EUO und/oder FER und/oder LAU und/oder MEL und/oder MER und/oder MFI und/oder MFS und/oder MTT und/oder MTW und/oder NES und/oder TON aufweist.

9. Anordnung nach einem der vorangegangenen Ansprüche, **dadurch gekennzeichnet, dass** das Molekularsieb aus Zeolithen vom Typ Edingtonit und/ oder Li-A und/ oder Bikitait und/ oder Chapazit und/ oder Cloverit und/ oder ZK-5 und/ oder Zeolith A und/ oder Natrolit und/ oder Paulingit und/ oder Roggianit und/ oder Thomsonit und/ oder Brewsterit und/ oder Chiavennit und/ oder Dachiardit und/ oder Gismondin und/ oder Goosecreekit und/ oder Heulandit und/ oder Na-J und/ oder Levyne und/ oder Montesommait und/ oder Phillipsit und/ oder Wenkit und/ oder Yugawaralit und/ oder TMA-E und/ oder Epistilbit und/ oder Erionit und/ oder EU-1 und/ oder Ferrierit und/ oder Laumontit und/ oder ZSM-11 und/ oder Merlionit und/ oder ZSM-5 und/ oder ZSM-57 und/ oder ZSM-23 und/ oder ZSM-12 und/ oder NU-87 und/ oder Theta-1 besteht.

10. Anordnung nach einem der Ansprüche 1 bis 8, **dadurch gekennzeichnet, dass** das Molekularsieb aus Aluminophosphaten vom Typ AlPO-18 und/ oder AlPO-22 und/ oder AlPO-52 und/ oder AlPO-12-TAMU und/ oder AlPO-25 und/ oder AlPO-C besteht.

11. Anordnung nach einem der Ansprüche 1 bis 8, **dadurch gekennzeichnet, dass** das Molekularsieb aus Silikoaluminophosphat SAPO-40 besteht.

12. Anordnung nach einem der vorangegangenen Ansprüche, **dadurch gekennzeichnet, dass** das Molekularsieb eine Oxidationsaktivität für Kohlenwasserstoffe aufweist.

13. Anordnung nach einem der vorangegangenen Ansprüche, **dadurch gekennzeichnet, dass** in dem Molekularsieb Palladium und/ oder Ruthenium und/ oder Iridium und/ oder Wolfram und/ oder Titan und/ oder Lanthan und/ oder Molybdän und/ oder Cer und/ oder Mangan und/ oder Vanadium und/ oder Rhodium enthalten sind.

14. Anordnung nach einem der vorangegangenen Ansprüche, **dadurch gekennzeichnet, dass** die Konzentration wenigstens einer Aktivkomponente zur Oxidation von Stickstoffmonoxid in der Molekularsieb-Schicht niedriger ist als im Katalysator zur Oxidation von Stickstoffmonoxid.

15. Anordnung nach einem der vorangegangenen Ansprüche, **dadurch gekennzeichnet, dass** im Katalysator zur Oxidation von Stickstoffmonoxid die Konzentration von Platin höher ist als in der Molekularsieb-Schicht und/oder dass in der Molekularsieb-Schicht die Konzentration von Palladium und/ oder Ruthenium und/ oder Iridium und/ oder Wolfram und/ oder Titan und/ oder Lanthan und/ oder Molybdän und/ oder Cer und/ oder Mangan und/ oder Vanadium und/ oder Rhodium höher ist, als im Katalysator zur Oxidation von Stickstoffmonoxid.

16. Anordnung nach einem der vorangegangenen Ansprüche, **dadurch gekennzeichnet, dass** der Katalysator zur Oxidation von Stickstoffmonoxid und die Molekularsieb-Schicht oder die Molekularsieb-Schicht und der Katalysator zur Oxidation von Kohlenwasserstoffen oder der Katalysator zur Oxidation von Stickstoffmonoxid und die Molekularsieb-Schicht und der Katalysator zur Oxidation von Kohlenwasserstoffen miteinander verbunden sind und nicht zerstörungsfrei voneinander getrennt werden können.

17. Anordnung nach einem der vorangegangenen Ansprüche, **dadurch gekennzeichnet, dass** der Katalysator zur Oxidation von Stickstoffmonoxid und die Molekularsieb-Schicht oder die Molekularsieb-Schicht und der Katalysator zur Oxidation von Kohlenwasserstoffen oder der Katalysator zur Oxidation von Stickstoffmonoxid und die Molekularsieb-Schicht und der Katalysator zur Oxidation von Kohlenwasserstoffen auf getrennten Bauteilen angeordnet sind.

18. Anordnung nach einem der vorangegangenen Ansprüche, **dadurch gekennzeichnet, dass** der Katalysator zur Oxidation von Stickstoffmonoxid und/ oder die Molekularsieb-Schicht und/ oder der Katalysator zur Oxidation von Kohlenwasserstoffen auf einem Partikelfilter angeordnet sind.

19. Anordnung nach einem der vorangegangenen Ansprüche, **dadurch gekennzeichnet, dass** die Molekularsieb-Schicht auf der Abströmseite eines Partikelfilters angeordnet ist.

20. Anordnung nach einem der vorangegangenen Ansprüche, **dadurch gekennzeichnet, dass** der Katalysator zur Oxidation von Stickstoffmonoxid und das Molekularsieb stromab eines Partikelfilters angeordnet sind.

21. Anordnung nach einem der vorangegangenen Ansprüche, **dadurch gekennzeichnet, dass** der Partikelfilter aus Metall und/oder Sintermetall und/oder Keramik und/oder Filterschaum und/oder Keramikfasern und/oder Quarzfasern und/oder Glasfasern und/oder Siliziumcarbid und/oder Aluminiumtitanat besteht.

22. Anordnung nach einem der vorangegangenen Ansprüche, **dadurch gekennzeichnet, dass** die mittlere Dicke des Molekularsiebs/ der Molekularsieb-Schicht mindestens 3Å höchstens aber 5µm beträgt.

## Claims

1. Arrangement for exhaust gas aftertreatment in internal combustion engines operated with excess air, such as diesel engines and gasoline engines with direct injection, where the arrangement includes a catalyst installed in the exhaust gas duct of an internal combustion engine for oxidation of nitrogen monoxide, **characterized in that** at least one molecular sieve that keeps sulfur dioxide away from the at least one catalyst is disposed between the exhaust gas and the at least one catalyst for oxidation of nitrogen monoxide and/or upstream of the at least one catalyst for oxidation of nitrogen monoxide, the diameter of the free passages through the molecular sieve is between 3 Å and 6 Å and, on the side of the molecular sieve facing the hydrocarbonaceous exhaust gas, there is a catalyst for oxidation of hydrocarbons, where the active component of the catalyst for oxidation of hydrocarbons is selected from the group consisting of palladium, ruthenium, iridium, rhodium, tungsten, titanium, lanthanum, molybdenum, cerium and/or manganese.

2. Arrangement according to Claim 1, **characterized in that** the molecular sieve takes the form of a molecular sieve layer on the catalyst for NO oxidation.

3. Arrangement according to Claim 1, **characterized in that** the molecular sieve is disposed on a support upstream of the catalyst having NO oxidation activity.

4. Arrangement according to Claim 1, **characterized in that** the active component for the catalyst for oxidation of nitrogen monoxide contains platinum and/or palladium.

5. Arrangement according to any of the preceding claims, **characterized in that** the active components of the catalyst for oxidation of nitrogen monoxide are embedded into a zeolite structure.

6. Arrangement according to Claim 5, **characterized in that** the zeolite is of the MFI and/or BEA and/or FAU type.

7. Arrangement according to any of the preceding claims, **characterized in that** the molecular sieve has been produced with the aid of zeolites and/or silicates and/or metal silicates and/or aluminates and/or metal aluminates and/or silicophosphates and/or metal silicophosphates and/or silicoaluminophosphates and/or aluminophosphates and/or metal aluminophosphates and/or aluminosilicates.

8. Arrangement according to any of the preceding claims, **characterized in that** the molecular sieve has lattice structures of the EDI and/or ABW and/or AEI and/or AFR and/or AWW and/or BIK and/or CHA and/or CLO and/or KFI and/or LTA and/or NAT and/or PAU and/or RHO and/or RON and/or THO and/or AFT and/or ATT and/or ATV and/or BRE and/or CAS and/or CHI and/or DAC and/or DDR and/or GIS and/or GOO and/or HEU and/or JBW and/or LEV and/or MON and/or PHI and/or WEN and/or YUG and/or APC and/or EAB and/or EPI and/or ERI and/or EUO and/or FER and/or LAU and/or MEL and/or MER and/or MFI and/or MFS and/or MTT and/or MTW and/or NES and/or TON type.

9. Arrangement according to any of the preceding claims, **characterized in that** the molecular sieve consists of zeolites of the edingtonite and/or Li-A and/or bikitaite and/or chapazite and/or cloverite and/or ZK-5 and/or zeolite A and/or natrolite and/or paulingite and/or roggianite and/or thomsonite and/or brewsterite and/or chiavennite and/or dachiardite and/or gismondine and/or goosecreekite and/or heulandite and/or Na-J and/or levyne and/or montesommaite and/or phillipsite and/or wenkite and/or yugawaralite and/or TMA-E and/or epistilbite and/or erionite and/or EU-1 and/or ferrierite and/or laumontite and/or ZSM- 11 and/or merlionite and/or ZSM-5 and/or ZSM-57 and/or ZSM-23 and/or ZSM-12 and/or NU-87 and/or theta-1 type.

10. Arrangement according to any of Claims 1 to 8, **characterized in that** the molecular sieve consists of aluminophosphates of the AlPO-18 and/or AlPO-22 and/or AlPO-52 and/or AlPO-12-TAMU and/or AlPO-25 and/or AlPO-C type.

11. Arrangement according to any of Claims 1 to 8, **characterized in that** the molecular sieve consists of silicoaluminophosphate SAPO-40.

12. Arrangement according to any of the preceding claims, **characterized in that** the molecular sieve has oxidation activity for hydrocarbons.

13. Arrangement according to any of the preceding claims, **characterized in that** the molecular sieve includes palladium and/or ruthenium and/or iridium and/or tungsten and/or titanium and/or lanthanum and/or molybdenum and/or cerium and/or manganese and/or vanadium and/or rhodium.

14. Arrangement according to any of the preceding claims, **characterized in that** the concentration of at least one active component for oxidation of nitrogen monoxide in the molecular sieve layer is less than in the catalyst for oxidation of nitrogen monoxide.

15. Arrangement according to any of the preceding claims, **characterized in that** the concentration of platinum in the catalyst for oxidation of nitrogen monoxide is higher than in the molecular sieve layer and/or **in that** the concentration of palladium and/or ruthenium and/or iridium and/or tungsten and/or titanium and/or lanthanum and/or molybdenum and/or cerium and/or manganese and/or vanadium and/or rhodium in the molecular sieve layer is higher than in the catalyst for oxidation of nitrogen monoxide.

16. Arrangement according to any of the preceding claims, **characterized in that** the catalyst for oxidation of nitrogen monoxide and the molecular sieve layer or the molecular sieve layer and the catalyst for oxidation of hydrocarbons or the catalyst for oxidation of nitrogen monoxide and the molecular sieve layer and the catalyst for oxidation of hydrocarbons are bonded to one another and cannot be separated from one another without destruction.

17. Arrangement according to any of the preceding claims, **characterized in that** the catalyst for oxidation of nitrogen monoxide and the molecular sieve layer or the molecular sieve layer and the catalyst for oxidation of hydrocarbons or the catalyst for oxidation of nitrogen monoxide and the molecular sieve layer and the catalyst for oxidation of hydrocarbons are disposed on separate components.

18. Arrangement according to any of the preceding claims, **characterized in that** the catalyst for oxidation of nitrogen monoxide and/or the molecular sieve layer and/or the catalyst for oxidation of hydrocarbons are disposed on a particulate filter.

19. Arrangement according to any of the preceding claims, **characterized in that** the molecular sieve layer is disposed on the downstream side of a particulate filter.

20. Arrangement according to any of the preceding claims, **characterized in that** the catalyst for oxidation of nitrogen monoxide and the molecular sieve are arranged downstream of a particulate filter.

21. Arrangement according to any of the preceding claims, **characterized in that** the particulate filter consists of metal and/or sintered metal and/or ceramic and/or filter foam and/or ceramic fibres and/or quartz fibres and/or glass fibres and/or silicon carbide and/or aluminium titanate.

22. Arrangement according to any of the preceding claims, **characterized in that** the average thickness of the molecular sieve/molecular sieve layer is at least 3 Å but at most 5 µm.

## Revendications

1. Dispositif pour le post-traitement des gaz d'échappement de moteurs à combustion interne actionnés avec un excès d'air, tel que les moteurs diesel et les moteurs à essence à injection directe, le dispositif comprenant un catalyseur pour l'oxydation du monoxyde d'azote installé dans la conduite de gaz d'échappement d'un moteur à combustion interne, **caractérisé en ce qu'**au moins un tamis moléculaire est placé entre les gaz d'échappement et ledit au moins un catalyseur pour l'oxydation du monoxyde d'azote et/ou est placé en amont dudit au moins un catalyseur pour l'oxydation du monoxyde d'azote, qui retient le dioxyde de soufre dudit au moins un catalyseur, le diamètre des passages libres à travers le tamis moléculaire se situant entre 3 Å et 6 Å et un catalyseur pour l'oxydation d'hydrocarbures est installé sur la face du tamis moléculaire tournée vers les gaz d'échappement contenant des hydrocarbures, le composant actif du catalyseur pour l'oxydation des hydrocarbures étant choisi dans le groupe constitué par le palladium, le ruthénium, l'iridium, le rhodium, le tungstène, le titane, le lanthane, le molybdène, le cérium et/ou le manganèse.

2. Dispositif selon la revendication 1, **caractérisé en ce que** le tamis moléculaire est agencé en tant que couche de tamis moléculaire sur le catalyseur pour l'oxydation de NO.

3. Dispositif selon la revendication 1, **caractérisé en ce que** le tamis moléculaire est disposé en tant que couche de tamis moléculaire sur un support en amont du catalyseur présentant une activité oxydante vis-à-vis de NO.

4. Dispositif selon la revendication 1, **caractérisé en ce que** le composant actif du catalyseur pour l'oxydation du monoxyde d'azote contient du platine et/ou du palladium.

5. Dispositif selon l'une quelconque des revendications précédentes, **caractérisé en ce que** les composants actifs du catalyseur pour l'oxydation du monoxyde d'azote sont intégrés dans une structure de type zéolite.

6. Dispositif selon la revendication 5, **caractérisé en ce que** la zéolithe est du type MFI et/ou du type BEA et/ou du type FAU.

7. Dispositif selon l'une quelconque des revendications précédentes, **caractérisé en ce que** le tamis moléculaire est préparé à l'aide de zéolithes et/ou de silicates et/ou de métallo-silicates et/ou d'aluminates et/ou de métallo-aluminates et/ou de silicophosphates et/ou de métallo-silicophosphates et/ou de silico-aluminophosphates et/ou d'aluminophosphates et/ou de métallo-aluminophosphates et/ou d'aluminosilicates.

8. Dispositif selon l'une quelconque des revendications précédentes, **caractérisé en ce que** le tamis moléculaire présente des structures réticulaires de type EDI et/ou ABW et/ou AEI et/ou AFR et/ou AWW et/ou BIK et/ou CHA et/ou -CLO et/ou KFI et/ou LTA et/ou NAT et/ou PAU et/ou RHO et/ou -RON et/ou THO et/ou AFT et/ou ATT et/ou ATV et/ou BRE et/ou CAS et/ou - CHI et/ou DAC et/ou DDR et/ou GIS et/ou GOO et/ou HEU et/ou JBW et/ou LEV et/ou MON et/ou PHI et/ou WEN et/ou YUG et/ou APC et/ou EAB et/ou EPI et/ou ERI et/ou EUO et/ou FER et/ou LAU et/ou MEL et/ou MER et/ou MFI et/ou MFS et/ou MTT et/ou MTW et/ou NES et/ou TON.

9. Dispositif selon l'une quelconque des revendications précédentes, **caractérisé en ce que** le tamis moléculaire est constitué de zéolithes du type édingtonite et/ou Li-A et/ou bikitaite et/ou chapacite et/ou clovérite et/ou ZK-5 et/ou zéolithe A et/ou natrolite et/ou paulingite et/ou roggianite et/ou thomsonite et/ou brewstérite et/ou chiavennite et/ou dachiardite et/ou gismondine et/ou goosecreekite et/ou heulandite et/ou Na-J et/ou levyne et/ou montésommaite et/ou phillipsite et/ou wenkite et/ou yugawaralite et/ou TMA-E et/ou épistilbite et/ou érionite et/ou EU-1 et/ou ferriérite et/ou laumontite et/ou ZSM-11 et/ou merlionite et/ou ZSM-5 et/ou ZSM-57 et/ou ZSM-23 et/ou ZSM-12 et/ou NU-87 et/ou thêta-1.

10. Dispositif selon l'une quelconque des revendications 1 à 8, **caractérisé en ce que** le tamis moléculaire est composé d'aluminophosphates de type AlPO-18 et/ou AlPO-22 et/ou AlPO-52 et/ou AlPO-12-TAMU et/ou AlPO-25 et/ou AlPO-C.

11. Dispositif selon l'une quelconque des revendications 1 à 8, **caractérisé en ce que** le tamis moléculaire est composé de silicoaluminophosphate de type SAPO-40.

12. Dispositif selon l'une quelconque des revendications précédentes, **caractérisé en ce que** le tamis moléculaire présente une activité oxydante vis-à-vis des hydrocarbures.

13. Dispositif selon l'une quelconque des revendications précédentes, **caractérisé en ce que** le tamis moléculaire contient du palladium et/ou du ruthénium et/ou de l'iridium et/ou du tungstène et/ou du titane et/ou du lanthane et/ou du molybdène et/ou du cérium et/ou du manganèse et/ou du vanadium et/ou du rhodium.

14. Dispositif selon l'une quelconque des revendications précédentes, **caractérisé en ce que** la concentration d'au moins un composant actif pour l'oxydation de monoxyde d'azote dans la couche de tamis moléculaire est inférieure à celle dans le catalyseur pour l'oxydation du monoxyde d'azote.

15. Dispositif selon l'une quelconque des revendications précédentes, **caractérisé en ce que** dans le catalyseur pour l'oxydation du monoxyde d'azote, la concentration en platine est supérieure à celle dans la couche de tamis moléculaire et/ou **en ce que** dans la couche de tamis moléculaire, la concentration en palladium et/ou en ruthénium et/ou en iridium et/ou en tungstène et/ou en titane et/ou en lanthane et/ou en molybdène et/ou en cérium et/ou en manganèse et/ou en vanadium et/ou en rhodium est supérieure à celle dans le catalyseur pour l'oxydation du monoxyde d'azote.

16. Dispositif selon l'une quelconque des revendications précédentes, **caractérisé en ce que** le catalyseur pour l'oxydation du monoxyde d'azote et la couche de tamis moléculaire ou bien la couche de tamis moléculaire et le catalyseur pour l'oxydation d'hydrocarbures ou bien le catalyseur pour l'oxydation du monoxyde d'azote et la couche de tamis moléculaire et le catalyseur pour l'oxydation d'hydrocarbures sont liés entre eux et ne peuvent pas être séparés sans être détruits.

17. Dispositif selon l'une quelconque des revendications précédentes, **caractérisé en ce que** le catalyseur pour l'oxydation du monoxyde d'azote et la couche de tamis moléculaire ou bien la couche de tamis moléculaire et le catalyseur pour l'oxydation d'hydrocarbures ou bien le catalyseur pour l'oxydation du monoxyde d'azote et la couche de tamis moléculaire et le catalyseur pour l'oxydation d'hydrocarbures sont disposés sur des pièces séparées.

18. Dispositif selon l'une quelconque des revendications précédentes, **caractérisé en ce que** le catalyseur pour l'oxydation du monoxyde d'azote et/ou la couche de tamis moléculaire et/ou le catalyseur pour l'oxydation d'hydrocarbures sont disposés sur un filtre à particules.

19. Dispositif selon l'une quelconque des revendications précédentes, **caractérisé en ce que** la couche de tamis moléculaire est disposée du côté aval d'un filtre à particules.

20. Dispositif selon l'une quelconque des revendications précédentes, **caractérisé en ce que** le catalyseur pour l'oxydation du monoxyde d'azote et le tamis moléculaire sont disposés du côté aval d'un filtre à particules.

21. Dispositif selon l'une quelconque des revendications précédentes, **caractérisé en ce que** le filtre à particules est composé de métal et/ou de métal fritté et/ou de céramique et/ou de mousse de filtre et/ou de fibres de céramique et/ou de fibres de quartz et/ou de fibres de verre et/ou de carbure de silicium et/ou de titanate d'aluminium.

22. Dispositif selon l'une quelconque des revendications précédentes, **caractérisé en ce que** l'épaisseur moyenne du tamis moléculaire/de la couche de tamis moléculaire est d'au moins 3 Å mais d'au plus 5 µm.
